# DEMANDE DE BREVET EUROPEEN

(11) **EP 4 841 538 A1**
(43) Date de publication de la demande: **18.11.2026**
(21) Numéro de dépôt: 26178292.4
(22) Date de dépôt: 12.05.2026
(51) Int. Cl.: G06Q 10/101, G06Q 50/163, G06V 20/64

(54) **PROCÉDÉ DE GÉNÉRATION D'UNE MAQUETTE NUMÉRIQUE 3D, PROGRAMME D'ORDINATEUR ET DISPOSITIF ASSOCIÉS**

(30) Priorité: 16.05.2025 FR 2505227
(71) Demandeur: SNCF Réseau, 93200 Saint-Denis (FR)
(72) Inventeur: SALAVATI, Bahar, 78500 Sartrouville (FR); ELGHAZALY, Ismail, 92290 Châtenay-Malabry (FR); BEN HARIZ,, Ismail, 80500 Asainvillers (FR); DUGENNE Thibault, 75020 Paris (FR)
(74) Mandataire: IPAZ

(57) **Abrégé**

L'invention concerne un procédé (2) de génération d'une maquette numérique tridimensionnelle, le procédé comportant les étapes :
- détection (22) d'au moins un objet à partir d'un nuage de points ;
- pour chaque objet détecté :
• calcul (24), à partir des points respectifs, de coordonnées d'un point d'insertion virtuel correspondant ;
• identification (26), à partir des coordonnées du point d'insertion virtuel, d'un objet réel correspondant audit objet détecté ;
• sélection (28) d'un modèle tridimensionnel correspondant à l'objet réel identifié ; et
• disposition (30), dans une scène tridimensionnelle, du modèle tridimensionnel sélectionné, une position du modèle tridimensionnel étant fonction du point d'insertion virtuel ou du point d'insertion réel correspondant.

## Description

### Domaine techniaue

La présente invention concerne un procédé de génération d'une maquette numérique tridimensionnelle d'un ouvrage d'un réseau de transport.

L'invention concerne également un programme d'ordinateur et un dispositif mettant en œuvre un tel procédé.

L'invention s'applique au domaine de la modélisation d'infrastructures, et en particulier d'infrastructures d'un réseau ferroviaire.

### État de la techniaue

Il est connu d'avoir recours à une approche dite « BIM » (de l'anglais *« Building Information Modeling »,* ou modélisation des informations de la construction) pour la modélisation des données d'un bâtiment, d'une structure, d'un édifice ou d'un ouvrage, en un jumeau numérique documenté.

La mise en œuvre d'une telle approche BIM est avantageuse, dans la mesure où elle facilite la gestion de projets et la collaboration entre intervenants, principalement dans la construction, notamment grâce au recours à une maquette numérique 3D.

De cette façon, des responsabilités, des périodes et des limites d'intervention de chaque partie prenante autour d'un projet sont susceptibles d'être définies et intégrées à une maquette numérique 3D. Plus précisément, les données relatives au projet sont stockées dans la maquette numérique 3D, dont chaque élément est un objet porteur de données le caractérisant (référence, fournisseur, ...).

Une telle maquette numérique 3D facilite la détection des conflits et optimise la planification des projets et des travaux. En outre, pour l'exploitation et la maintenance, elle autorise une centralisation des données, favorise la maintenance prédictive et améliore la gestion des interventions.

De cette façon, les informations nécessaires au bon déroulement du projet sont centralisées dans la maquette numérique 3D, qui forme ainsi une passerelle d'échange entre les différents intervenants.

Il découle de ce qui précède que, dans le cas d'un réseau ferroviaire, chaque partie dudit réseau nécessite la création d'une maquette numérique 3D correspondante pour la mise en œuvre d'une telle approche BIM.

Néanmoins, une telle approche ne donne pas entière satisfaction.

En effet, les maquettes numériques 3D sont réalisées de façon manuelle par des opérateurs (dits « BIM modeleurs »). Par conséquent, la modélisation d'une infrastructure ferroviaire telle qu'une gare, un pont ou encore un tunnel est susceptible de nécessiter des semaines, voire des mois de travail.

Or, un réseau ferroviaire comprend potentiellement plusieurs centaines d'objets différents et des milliers de kilomètres de voies. Ceci implique un investissement en temps et en main d'œuvre considérable.

Un but de la présente invention est de remédier à au moins un des inconvénients de l'état de la technique.

Un autre but de l'invention est de proposer un procédé de génération d'une maquette numérique 3D qui soit peu coûteux en ressources, notamment en temps.

### Exposé de l'invention

À cet effet, l'invention concerne un procédé du type précité, mis en œuvre par ordinateur et comportant les étapes :
- détection automatique d'au moins un objet à partir d'un nuage de points représentatifs de surfaces d'objets présents dans un volume d'observation comprenant tout ou partie de l'ouvrage, chaque point étant associé à un jeu de cordonnées respectif dans un repère tridimensionnel prédéterminé ;
- pour chaque objet détecté :
   - calcul, à partir des points respectifs, de coordonnées d'un point d'insertion virtuel correspondant ;
   - identification, à partir des coordonnées du point d'insertion virtuel et d'une base de données de référencement, d'un objet réel correspondant audit objet détecté,
      la base de données de référencement comprenant une pluralité d'objets réels appartenant au réseau de transport et, pour chaque objet réel, des coordonnées d'un point d'insertion réel correspondant ;
   - sélection, dans une banque de modèles tridimensionnels, d'un modèle tridimensionnel correspondant à l'objet réel identifié ; et
   - disposition, dans une scène tridimensionnelle, du modèle tridimensionnel sélectionné, une position du modèle tridimensionnel dans la scène tridimensionnelle étant fonction du point d'insertion virtuel ou du point d'insertion réel correspondant.

En effet, grâce à un tel procédé, la maquette numérique tridimensionnelle est générée automatiquement grâce à la détection d'objets dans le nuage de points, mais également grâce à leur identification et leur positionnement automatiques dans la scène tridimensionnelle, par le recours à des points de référence prédéterminés, en l'occurrence les points d'insertion. Il en résulte un gain en temps considérable par rapport aux méthodes usuelles. En outre, grâce à un tel procédé, le risque d'erreurs lors de la génération de la maquette numérique tridimensionnelle est réduit.

De façon avantageuse, le procédé selon l'invention présente une ou plusieurs des caractéristiques suivantes, prises isolément ou selon toute combinaison techniquement possible :
la détection comprend :
   - un premier traitement comportant la fourniture du nuage de points en entrée d'un premier modèle de détection d'objet préalablement entraîné ; et/ou
   - un deuxième traitement comportant :
      - calcul d'une ortho-image, le calcul comprenant :
         ∘ assignation de chaque point du nuage de points à une maille correspondante d'un maillage prédéterminé d'un plan horizontal du repère tridimensionnel, en fonction des coordonnées dudit point dans le plan horizontal ;
         ∘ pour chaque maille, affectation d'une valeur égale à un écart entre la coordonnée maximale et la coordonnée minimale, suivant un axe vertical orthogonal au plan horizontal, des points assignés à ladite maille ;
      - fourniture de l'ortho-image calculée en entrée d'un deuxième modèle d'intelligence artificielle ;
pour chaque objet détecté, le calcul des coordonnées du point d'insertion virtuel correspondant est fonction d'une classe dudit objet détecté ;
le procédé comprend, pour chaque objet détecté, préalablement au calcul des coordonnées du point d'insertion virtuel respectif, une étape de filtrage des points du sous-ensemble de points correspondant, l'étape de filtrage comprenant :
   - une identification d'un sol et, pour chaque objet détecté, une suppression des points indicatifs du sol ; et/ou
   - pour chaque objet détecté, une mise en œuvre d'un algorithme de filtrage de valeurs aberrantes ;
le procédé comprend, en outre, pour chaque objet détecté, une détermination d'une orientation correspondante en fonction d'une classe dudit objet détecté ;
chaque modèle tridimensionnel présente une orientation dépendant à l'orientation de l'objet objet détecté respectif ;
le réseau de transport est un réseau ferroviaire.

Selon un autre aspect de l'invention, il est proposé un programme d'ordinateur comprenant des instructions exécutables qui, lorsqu'elles sont exécutées par ordinateur, mettent en œuvre les étapes du procédé tel que défini ci-dessus.

Le programme d'ordinateur peut être en tout langage informatique, tel que par exemple en langage machine, en C, C++, JAVA, Python, etc.

Selon un autre aspect de l'invention, il est proposé un dispositif informatique pour la génération d'une maquette numérique tridimensionnelle d'un ouvrage d'un réseau de transport, configuré pour :
- détecter automatiquement au moins un objet à partir d'un nuage de points représentatifs de surfaces d'objets présents dans un volume d'observation comprenant tout ou partie de l'ouvrage, chaque point étant associé à un jeu de cordonnées respectif dans un repère tridimensionnel prédéterminé ;
- pour chaque objet détecté :
   - calculer, à partir des points respectifs, des coordonnées d'un point d'insertion virtuel correspondant ;
   - identifier, à partir des coordonnées du point d'insertion virtuel et d'une base de données de référencement, un objet réel correspondant audit objet détecté,
      la base de données de référencement comprenant une pluralité d'objets réels appartenant au réseau de transport et, pour chaque objet réel, des coordonnées d'un point d'insertion réel correspondant ;
   - sélectionner, dans une banque de modèles tridimensionnels, un modèle tridimensionnel correspondant à l'objet réel identifié ; et
   - disposer, dans une scène tridimensionnelle, le modèle tridimensionnel sélectionné, une position du modèle tridimensionnel dans la scène tridimensionnelle étant fonction du point d'insertion virtuel ou du point d'insertion réel correspondant.

Le dispositif selon l'invention peut être tout type d'appareil tel qu'un serveur, un ordinateur, une tablette, un calculateur, un processeur, une puce informatique, programmé pour mettre en œuvre le procédé selon l'invention, par exemple en exécutant le programme d'ordinateur selon l'invention.

### Brève description des figures

L'invention sera mieux comprise à la lecture de la description qui va suivre, donnée uniquement à titre d'exemple non limitatif et faite en se référant aux dessins annexés sur lesquels :
la figure 1 est un ordinogramme d'un procédé de génération d'une maquette numérique 3D selon l'invention ;
la figure 2 est une représentation schématique d'un dispositif informatique susceptible de mettre en œuvre le procédé de la figure 1 ;
la figure 3 est une représentation schématique d'un repère tridimensionnel orthogonal utilisé lors de la mise en œuvre du procédé de la figure 1 ; et
la figure 4 est une représentation schématique d'un maillage d'un plan horizontal dans le repère tridimensionnel de la figure 3.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

### Description détaillée

Dans la description qui va suivre, les expressions « tridimensionnel » et « 3D » sont considérées comme interchangeables.

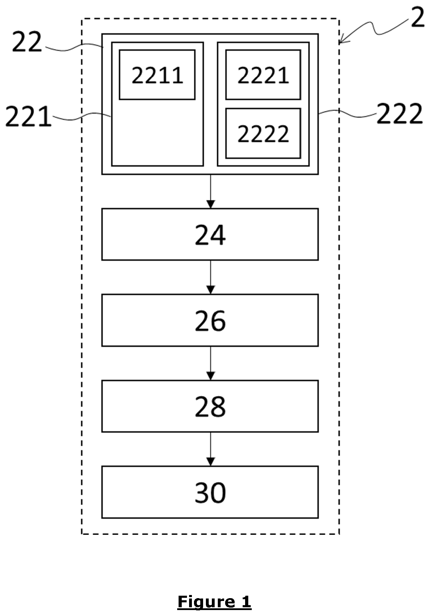

Un procédé 2 de génération d'une maquette numérique tridimensionnelle (par la suite, « maquette 3D ») d'un ouvrage d'un réseau de transport, est illustré par la figure 1.

De préférence, le réseau de transport est un réseau ferroviaire.

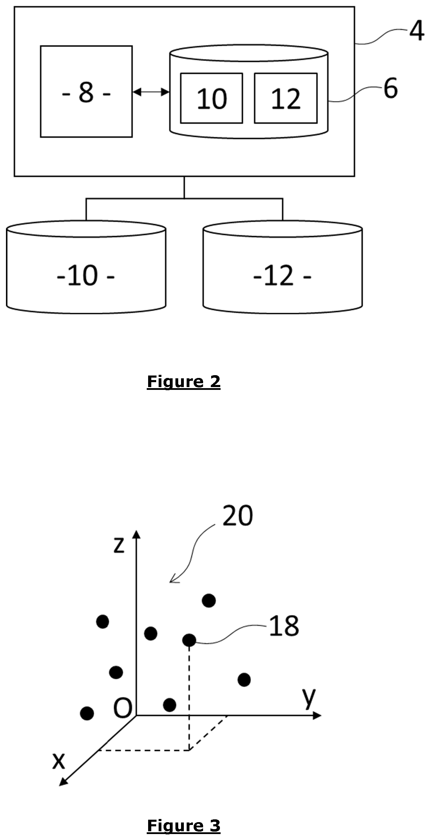

Le procédé 2 de génération d'une maquette numérique tridimensionnelle (également appelé « procédé de génération ») est susceptible d'être mis en œuvre par tout dispositif informatique 4 (figure 2) comprenant une mémoire 6 et un processeur 8 reliés entre eux.

Comme illustré par la figure 2, le dispositif informatique 4 est, en outre, en communication avec une base de données de référencement 10 et une banque de modèles tridimensionnels 12.

La base de données de référencement 10 comprend une pluralité d'objets réels appartenant au réseau de transport. En outre, pour chaque objet réel du réseau de transport, la base de données de référencement 10 comporte des coordonnées d'un point d'insertion réel correspondant.

En outre, la banque de modèles 3D 12 comprend, pour chaque type (ou classe) d'objet, un modèle tridimensionnel correspondant.

Plus spécifiquement, la mémoire 6 est configurée pour stocker un programme 14 de génération de maquette 3D (ou « programme de génération ») selon l'invention. En outre, le processeur 8 est configuré pour exécuter des instructions du programme de génération 14 afin de mettre en œuvre le procédé de génération 2.

La mémoire 6 est, en outre, configurée pour stocker, dans un emplacement mémoire 16 correspondant, un nuage de points.

Par « nuage de points », il est entendu, au sens de la présente invention, un ensemble de points 18 (figure 3), chacun associé à un jeu de cordonnées respectif dans un repère tridimensionnel 20 prédéterminé.

De préférence, le repère tridimensionnel 20 présente un axe vertical (Oz) orienté parallèlement à la direction du champ de pesanteur. En outre, l'axe vertical (Oz) est orthogonal à un plan horizontal (xOy) comprenant les deux autres axes (Ox) et (Oy) du repère tridimensionnel 20.

En particulier, les points 18 du nuage de points stockés dans l'emplacement mémoire 16 sont représentatifs de surfaces d'objets (notamment d'objets solides) présents dans un volume d'observation prédéterminé comprenant tout ou partie de l'ouvrage.

Par exemple, les points 18 sont représentatifs des surfaces solides vues radialement par un mobile se déplaçant suivant une voie du réseau de transport, notamment une voie ferrée dans le cas d'un réseau ferroviaire.

Par exemple, de tels objets sont des caténaires, des poteaux de caténaires, des fils, un sol, des balises KVB (contrôle de vitesse par balises), des rails, des chambres de tirage, des circuits de voie, des passages à niveau, des éléments de signalisation, des bornes hectométriques, des murs de soutènement, etc.

Par exemple, le nuage de points a été acquis au moyen d'un dispositif de télémétrie, tel qu'un dispositif LiDAR (de l'anglais « *Light Detection And Ranging* », ou détection et estimation de la distance par la lumière) embarqué à bord d'un véhicule parcourant la voie.

Le recours au LiDAR est avantageux, dans la mesure où il autorise la localisation d'objets avec une grande précision (de l'ordre du centimètre), ce qui résulte, à l'issue de la mise en œuvre du procédé selon l'invention, par objets tridimensionnels agencés avec grande précision les uns par rapport aux autres, contrairement au cas des relevés terrain.

En variante, ou de façon complémentaire, le nuage de points est susceptible d'avoir été acquis au moyen de tout type de système statique ou dynamique approprié, par moyen LiDAR ou photogrammétrique.

En outre, chaque point 18 du nuage de points est associé à un identifiant unique.

Comme indiqué précédemment, le dispositif informatique 4 est configuré pour mettre en œuvre le procédé de génération 2.

Plus précisément, comme illustré par la figure 1, le procédé de génération 2 comprend une étape de détection 22, une étape de calcul 24, une étape d'identification 26, une étape de sélection 28 et une étape d'agencement 30.

### Etape de détection 22

Le dispositif informatique 4 est configuré pour, au cours de l'étape de détection 22, détecter automatiquement au moins un objet à partir du nuage de points 18.

Avantageusement, pour réaliser une telle détection automatique, le dispositif informatique 4 est configuré pour mettre en œuvre un premier traitement 221 comportant une fourniture 2211 du nuage de points 18 en entrée d'un premier modèle de détection d'objets.

Par exemple, le premier modèle de détection d'objets est basé sur un algorithme de segmentation sémantique et de segmentation de parties, configuré pour classifier les différents objets de l'environnement ferroviaire et pour détailler les nuages de points d'un même objet afin de différencier ses éléments. Par exemple, un tel modèle est configuré pour reconnaître un feu de signalisation, mais également chacune de ses parties : échelle, armature, feux, etc.

De préférence, le premier modèle de détection d'objets a été préalablement entraîné sur la base d'un premier jeu de données d'entraînement comprenant une pluralité de nuages de points.

Dans ce cas, chaque nuage de points du premier jeu de données d'entraînement comprend au moins un sous-ensemble de points, chacun représentatif d'une surface externe d'un même objet susceptible d'appartenir à un ouvrage du réseau de transport.

En outre, pour chaque nuage de points du premier jeu de données d'entraînement, chaque sous-ensemble de points est identifié comme appartenant à un même objet et est associé à une classe correspondante, ladite classe formant une sortie attendue du premier modèle de détection d'objets pour ledit nuage de points en tant qu'entrée.

Dans ce cas, il résulte, en sortie du premier modèle de détection d'objets, pour chaque objet (en l'occurrence, pour chaque objet 3D) détecté dans le nuage de points 18, une classe et une boîte englobante correspondant audit objet détecté.

Pour chaque objet 3D détecté, la boîte englobante contient les points 18 déterminés comme appartenant audit objet 3D.

En alternative, ou de façon complémentaire, pour réaliser une telle détection automatique, le dispositif informatique 4 est configuré pour mettre en œuvre un deuxième traitement 222 comportant un calcul 2221 d'une ortho-image et une fourniture 2222 de l'ortho-image calculée en entrée d'un deuxième modèle de détection d'objets.

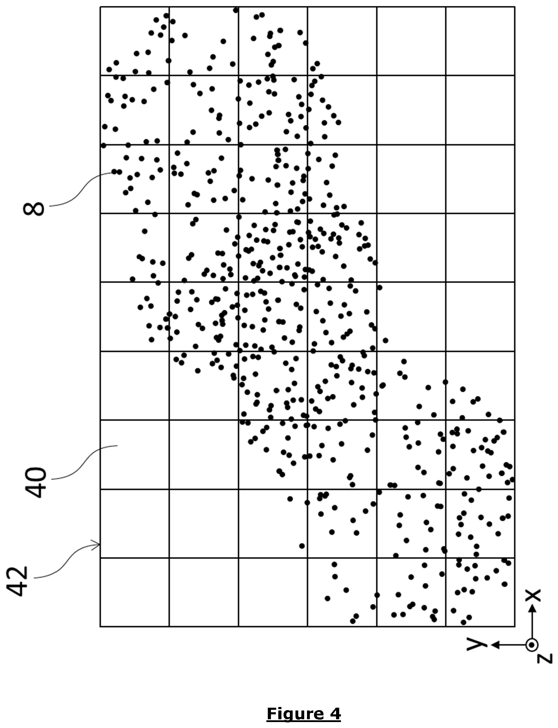

Plus précisément, afin de calculer l'ortho-image, le dispositif informatique 4 est configuré pour assigner, au cours de la phase 2221, chaque point 18 du nuage de points à une maille 40 (figure 4) correspondante, en fonction des coordonnées dudit point dans le plan horizontal.

Chaque maille 40 appartient à un maillage 42 prédéterminé du plan horizontal (xOy). Par exemple, un tel maillage 42 est généré à la volée, lors de l'exécution du procédé de génération 2, en fonction d'une taille de maille prédéterminée et des positions extrêmes, dans le plan horizontal (xOy), des points 18 du nuage de points. En outre, chaque maille 44 est identifiée de façon univoque.

Une telle phase d'assignation 2221 est assimilable à une projection des points 18 sur le maillage 42 suivant l'axe vertical (Oz), chaque point 18 étant assigné à la maille 40 à laquelle appartient la projection respective.

En outre, pour chaque maille 40, le dispositif informatique 4 est configuré pour affecter, à ladite maille 40, une valeur égale à un écart entre la coordonnée maximale et la coordonnée minimale, suivant l'axe vertical (Oz), des points 18 assignés à ladite maille 40.

L'ortho-image correspond au maillage 42, chaque maille étant associée à la valeur calculée correspondante.

En outre, le dispositif informatique 4 est configuré pour fournir, au cours de la phase 2222, l'ortho-image calculée en entrée d'un deuxième modèle de détection d'objets.

Par exemple, le deuxième modèle de détection d'objets est le modèle YOLO, tel que décrit par Joseph Redmon et al. dans la prépublication digitale « You Only Look Once: Unified, Real-Time Object Detection », référencée arxiv:1506.02640.

De préférence, le deuxième modèle de détection d'objets a été préalablement entraîné sur la base d'un deuxième jeu de données d'entraînement comprenant une pluralité d'ortho-images.

Dans ce cas, chaque ortho-image du deuxième jeu de données d'entraînement comprend au moins un sous-ensemble de mailles, chacun indicatif d'un même objet susceptible d'appartenir à un ouvrage du réseau de transport.

**En** outre, pour chaque ortho-image du deuxième jeu de données d'entraînement, chaque sous-ensemble de mailles est identifié comme représentatif d'un même objet et est associé à une classe correspondante, formant une sortie attendue du deuxième modèle de détection d'objets pour ladite ortho-image en tant qu'entrée.

Dans ce cas, il résulte, en sortie du deuxième modèle de détection d'objets, pour chaque objet détecté dans l'ortho-image, une classe et une boîte englobante correspondant audit objet détecté.

Pour chaque objet détecté, la boîte englobante contient les mailles 40 déterminées comme représentative audit objet.

En outre, pour chaque objet détecté, le dispositif informatique 4 est configuré pour affecter, audit objet détecté, les points 18 associés aux mailles correspondantes.

En alternative, ou de façon complémentaire, pour réaliser une telle détection, le dispositif informatique 4 est configuré pour mettre en œuvre l'algorithme RANSAC (de l'anglais *« RANdom SAmple Consensus »).*

Une telle mise en œuvre est avantageuse, dans la mesure où elle autorise une détection aisée des fils, par exemple des fils de rail et des fils de caténaire dans le cas d'un réseau ferré.

En alternative, ou de façon complémentaire, pour réaliser une telle détection, le dispositif informatique 4 est configuré pour analyser les altitudes (c'est-à-dire les coordonnées selon l'axe (Oz)) par rapport au sol des points 18. En particulier, le dispositif informatique 4 est configuré pour détecter, en tant qu'objets, des ensembles de points situés à une distance prédéterminée du sol. À titre d'exemple, le sous-ensemble de points se trouvant à une hauteur d'environ 15 cm du sol est susceptible d'être détecté comme correspondant, en totalité ou en partie, à des rails.

Avantageusement, la mémoire 6 est également configurée pour stocker un modèle numérique de terrain (MNT), représentatif du sol dépourvu de tous les éléments n'appartenant pas au sol (rails, quai, poteaux, etc.).

Le nuage de points étant discontinu et ne représentant pas une surface continue, le dispositif informatique 4 est avantageusement configuré pour mettre en œuvre l'algorithme de triangulation de Delaunay pour générer une surface continue représentative du sol.

### Etape de calcul 24

En outre, le dispositif informatique 4 est configuré de façon à calculer, au cours de l'étape de calcul 24, pour chaque objet détecté, des coordonnées d'un point d'insertion virtuel correspondant à partir des points 18 associés audit objet détecté.

Avantageusement, pour chaque objet détecté, le dispositif informatique 4 est configuré pour calculer les coordonnées du point d'insertion virtuel correspondant en fonction d'une classe dudit objet détecté. Une telle classe est, notamment, fournie en sortie de l'un des premier et deuxième modèles de détection d'objets décrits précédemment.

Par exemple, dans le cas d'un crocodile (élément ferroviaire), le point d'insertion virtuel correspond à l'isobarycentre des points 18 correspondants.

Selon un autre exemple, dans le cas d'un feu de signalisation, qui comprend un poteau et des escaliers, le point d'insertion virtuel correspond au point 18 de plus basse altitude qui est à la fois le plus éloigné du centre du poteau et le plus proche des escaliers. Dans ce cas, le dispositif informatique 4 est propre à identifier ledit poteau et lesdits escaliers.

Avantageusement, pour chaque objet détecté, le dispositif informatique 4 est configuré pour mettre en œuvre, préalablement à un tel calcul, un filtrage des points correspondants.

Un tel filtrage vise à réduire le bruit, notamment en supprimant des points attribués par erreur à l'objet détecté.

Par exemple, pour mettre en œuvre un tel filtrage, le dispositif informatique 4 est configuré pour identifier un sol à partir des points 18 et, pour chaque objet détecté, supprimer les points 18 indicatifs du sol.

Par exemple, le sol correspond aux points 18 présentant une altitude (c'est-à-dire une valeur selon l'axe (Oz)) inférieure à une valeur prédéterminée.

Alternativement, ou de façon complémentaire, pour réaliser un tel filtrage, le dispositif informatique 4 est configuré mettre en œuvre un algorithme de filtrage de valeurs aberrantes tel que SOR « *Statistical Outlier Removal »* ou ROR *« Radius Outlier Removal ».* Un tel algorithme de filtrage est, par exemple, décrit par Marie-Julie Rakotosaona et al. dans la publication digitale *« PointCleanNet: Learning to Denoise and Remove Outliers from Dense Point Clouds* », référencée arXiv:1901.01060.

Un tel filtrage est avantageux, dans la mesure où il conduit à des objets numériques dont l'aspect se rapproche de leur aspect réel, sans déformations causées par des objets environnants.

Avantageusement, pour chaque objet détecté, le dispositif informatique 4 est, en outre, configuré pour déterminer une orientation correspondante, notamment une orientation relativement à la voie la plus proche. Une telle voie a, par exemple, été détectée au cours de l'étape de détection 22.

En particulier, pour chaque objet détecté, le dispositif informatique 4 est configuré pour déterminer l'orientation correspondante en fonction d'une classe dudit objet détecté.

Par exemple, dans le cas d'un réseau ferroviaire, un crocodile est toujours parallèle aux rails. En outre, pour les potences de signalisation, les feux de signalisation correspondants sont orientés parallèlement à la voie la plus proche, dans un sens opposé à un sens de parcours de ladite voie.

### Etape d'identification 26

En outre, pour chaque objet détecté, le dispositif informatique 4 est configuré pour identifier, au cours de l'étape d'identification 26, un objet réel correspondant audit objet détecté.

Plus précisément, le dispositif informatique 4 est configuré pour identifier l'objet réel à partir des coordonnées du point d'insertion virtuel et de la base de données de référencement 10.

Plus précisément encore, le dispositif informatique 4 est configuré pour identifier l'objet réel à partir du résultat d'une comparaison des coordonnées du point d'insertion virtuel avec les coordonnées des points d'insertions des objets réels répertoriés dans la base de données de référencement 10.

### Etape de sélection 28

En outre, le dispositif informatique 4 est configuré pour, au cours de l'étape de sélection 28, sélectionner, dans la banque de modèles 3D 12, un modèle tridimensionnel correspondant à l'objet réel identifié.

De préférence, le dispositif informatique 4 est configuré pour, en cas d'échec de l'identification d'un objet réel associé à un objet détecté, générer un modèle 3D correspondant audit objet détecté.

Plus précisément, le dispositif informatique 4 est configuré pour, dans ce cas :
- estimer des vecteurs normaux en au moins une partie de l'objet détecté ; et
- reconstruire des surfaces externes correspondantes à partir des vecteurs normaux estimés.

Par exemple, pour au moins un point de l'objet détecté, le dispositif informatique est configuré pour estimer le vecteur normal correspondant à partir des coordonnées de points voisins.

En outre, une fois les vecteurs normaux estimés, le dispositif informatique 4 est, par exemple, configuré pour mettre en œuvre l'algorithme de reconstruction de Poisson afin de reconstruire les surfaces externes de l'objet détecté à partir de chaque point associé au vecteur normal respectif.

### Etape d'agencement 30

En outre, le dispositif informatique 4 est configuré de façon à, au cours de l'étape d'agencement 30, disposer, pour chaque objet détecté, le modèle 3D correspondant (déterminé au cours de l'étape de sélection 28) dans une scène tridimensionnelle.

Dans ce cas, pour chaque objet détecté, le modèle 3D correspondant est agencé dans la scène 3D en fonction du point d'insertion virtuel ou du point d'insertion réel correspondant.

Plus précisément, les modèles 3D sont disposés, dans la scène 3D, à des positions représentatives des coordonnées des points d'insertion des objets détectés respectifs.

Avantageusement, pour chaque objet détecté, le modèle 3D correspondant est agencé dans la scène 3D suivant une orientation dépendant de l'orientation en fonction du point d'insertion virtuel ou du point d'insertion réel correspondant.

Plus précisément, les modèles 3D sont disposés, dans la scène 3D, suivant des orientations conformes aux orientations des objets détectés respectifs. Les modèles 3D ainsi agencés forment des structures 3D.

Il en résulte une maquette 3D de l'ouvrage.

Avantageusement, chaque structure 3D est associée, à l'issue de son agencement dans la maquette 3D, à un corps de métier correspondant.

De préférence, afin de déterminer le corps de métier associé à chaque structure 3D, le dispositif informatique 4 est configuré pour utiliser :
- une classification d'objets, fondée sur les caractéristiques et fonctions propres à chaque objet 3D, et renseignées dans la banque de modèles 3D 12 ;
- une analyse contextuelle, dépendant de l'emplacement de la structure 3D ;
- des étiquettes et métadonnées, renseignées dans la banque de modèles 3D 12 ; et/ou
- des techniques d'apprentissage automatique.

Une telle caractéristique est avantageuse, dans la mesure où elle facilite la sélection, dans la maquette 3D, des structures 3D spécifiques à un corps de métier en vue de l'ajout d'annotations. Ceci est susceptible de faciliter la collaboration entre différents corps de métier intervenant sur un même ouvrage.

### Fonctionnement

Le fonctionnement du dispositif informatique 4 va maintenant être décrit en référence aux figures.

Au cours de l'étape de détection 22, le dispositif informatique 4 applique un traitement au nuage de points 18 stocké dans la mémoire 6 pour détecter automatiquement au moins un objet.

Avantageusement, pour réaliser une telle détection automatique, le dispositif informatique 4 met en œuvre le premier traitement 221.

Dans ce cas, le dispositif informatique 4 fournit (phase 2211) le nuage de points 18 en entrée du premier modèle de détection d'objets préalablement entraîné.

Il en résulte, en sortie du premier modèle de détection d'objets, pour chaque objet 3D détecté dans le nuage de points 18, la classe et la boîte englobante correspondantes.

En alternative, ou de façon complémentaire, le dispositif informatique 4 met en œuvre le deuxième traitement 222.

Dans ce cas, le dispositif informatique 4 calcule (phase 2221) l'ortho-image associée au nuage de points 18.

Puis, le dispositif informatique 4 fournit (phase 2222) l'ortho-image calculée en entrée du deuxième modèle de détection d'objets préalablement entraîné.

Il en résulte, en sortie du deuxième modèle de détection d'objets, pour chaque objet détecté dans l'ortho-image, la classe et la boîte englobante correspondantes.

En alternative, ou de façon complémentaire, le dispositif informatique 4 met en œuvre l'algorithme RANSAC, en particulier pour détecter des fils, par exemple des fils de rail et des fils de caténaire.

En alternative, ou de façon complémentaire, le dispositif informatique 4 analyse les altitudes par rapport au sol des points du nuage de points 18 pour détecter au moins un objet.

Puis, au cours de l'étape de calcul 24, pour chaque objet 3D détecté, le dispositif informatique 4 calcule les coordonnées du point d'insertion virtuel correspondant.

Avantageusement, pour chaque objet détecté, le dispositif informatique 4 détermine, en outre, l'orientation correspondante.

Puis, au cours de l'étape d'identification 26, pour chaque objet détecté, le dispositif informatique 4 identifie l'objet réel correspondant, en particulier à partir des coordonnées du point d'insertion virtuel et de la base de données de référencement 10.

Puis, au cours de l'étape de sélection 28, le dispositif informatique 4 sélectionne, dans la banque de modèles 3D 12, un modèle tridimensionnel correspondant à l'objet réel identifié.

De préférence, en cas d'échec de l'identification pour un objet détecté donné, le dispositif informatique 4 génère un modèle 3D correspondant à partir des points associés.

Puis, au cours de l'étape d'agencement 30, pour chaque objet détecté, le dispositif informatique 4 dispose le modèle 3D correspondant dans une scène tridimensionnelle, notamment en fonction du point d'insertion virtuel et de l'orientation associés.

Il en résulte une maquette 3D de l'ouvrage.

Bien entendu l'invention n'est pas limitée aux exemples qui viennent d'être décrits.

## Revendications

1. Procédé (2) de génération d'une maquette numérique tridimensionnelle d'un ouvrage d'un réseau de transport, le procédé étant mis en œuvre par ordinateur et comportant les étapes :
- détection (22) automatique d'au moins un objet à partir d'un nuage de points (18) représentatifs de surfaces d'objets présents dans un volume d'observation comprenant tout ou partie de l'ouvrage, chaque point étant associé à un jeu de cordonnées respectif dans un repère tridimensionnel (20) prédéterminé ;
- pour chaque objet détecté :
• calcul (24), à partir des points respectifs, de coordonnées d'un point d'insertion virtuel correspondant ;
• identification (26), à partir des coordonnées du point d'insertion virtuel et d'une base de données de référencement (10), d'un objet réel correspondant audit objet détecté,
la base de données de référencement (10) comprenant une pluralité d'objets réels appartenant au réseau de transport et, pour chaque objet réel, des coordonnées d'un point d'insertion réel correspondant ;
• sélection (28), dans une banque de modèles tridimensionnels (12), d'un modèle tridimensionnel correspondant à l'objet réel identifié ; et
• disposition (30), dans une scène tridimensionnelle, du modèle tridimensionnel sélectionné, une position du modèle tridimensionnel dans la scène tridimensionnelle étant fonction du point d'insertion virtuel ou du point d'insertion réel correspondant.

2. Procédé (2) selon la revendication 1, dans lequel la détection (22) comprend :
- un premier traitement (221) comportant la fourniture (2211) du nuage de points en entrée d'un premier modèle de détection d'objet préalablement entraîné ; et/ou
- un deuxième traitement (222) comportant :
• calcul (2221) d'une ortho-image, le calcul comprenant :
∘ assignation de chaque point du nuage de points à une maille correspondante d'un maillage prédéterminé d'un plan horizontal du repère tridimensionnel, en fonction des coordonnées dudit point dans le plan horizontal ;
∘ pour chaque maille, affectation d'une valeur égale à un écart entre la coordonnée maximale et la coordonnée minimale, suivant un axe vertical orthogonal au plan horizontal, des points assignés à ladite maille ;
• fourniture (2222) de l'ortho-image calculée en entrée d'un deuxième modèle d'intelligence artificielle.

3. Procédé (2) selon la revendication 1 ou 2, dans lequel, pour chaque objet détecté, le calcul des coordonnées du point d'insertion virtuel correspondant est fonction d'une classe dudit objet détecté.

4. Procédé (2) selon l'une quelconque des revendications 1 à 3, comprenant, pour chaque objet détecté, préalablement au calcul des coordonnées du point d'insertion virtuel respectif, une étape de filtrage des points du sous-ensemble de points correspondant, l'étape de filtrage comprenant :
- une identification d'un sol et, pour chaque objet détecté, une suppression des points indicatifs du sol ; et/ou
- pour chaque objet détecté, une mise en œuvre d'un algorithme de filtrage de valeurs aberrantes.

5. Procédé (2) selon l'une quelconque des revendications 1 à 4, comprenant, en outre, pour chaque objet détecté, une détermination d'une orientation correspondante en fonction d'une classe dudit objet détecté.

6. Procédé (2) selon la revendication 5, dans lequel chaque modèle tridimensionnel présente une orientation dépendant à l'orientation de l'objet objet détecté respectif.

7. Procédé (2) selon l'une quelconque des revendications 1 à 6, dans lequel le réseau de transport est un réseau ferroviaire.

8. Programme d'ordinateur comprenant des instructions exécutables qui, lorsqu'elles sont exécutées par ordinateur, mettent en en œuvre les étapes du procédé selon l'une quelconque des revendications 1 à 7.

9. Dispositif informatique (4) pour la génération d'une maquette numérique tridimensionnelle d'un ouvrage d'un réseau de transport, configuré pour :
- détecter automatiquement au moins un objet à partir d'un nuage de points (18) représentatifs de surfaces d'objets présents dans un volume d'observation comprenant tout ou partie de l'ouvrage, chaque point étant associé à un jeu de cordonnées respectif dans un repère tridimensionnel (20) prédéterminé ;
- pour chaque objet détecté :
• calculer, à partir des points respectifs, des coordonnées d'un point d'insertion virtuel correspondant ;
• identifier, à partir des coordonnées du point d'insertion virtuel et d'une base de données de référencement, un objet réel correspondant audit objet détecté,
la base de données de référencement comprenant une pluralité d'objets réels appartenant au réseau de transport et, pour chaque objet réel, des coordonnées d'un point d'insertion réel correspondant ;
• sélectionner, dans une banque de modèles tridimensionnels, un modèle tridimensionnel correspondant à l'objet réel identifié ; et
• disposer, dans une scène tridimensionnelle, le modèle tridimensionnel sélectionné, une position du modèle tridimensionnel dans la scène tridimensionnelle étant fonction du point d'insertion virtuel ou du point d'insertion réel correspondant.
